(19) Europäisches Patentamt
European Patent Office
Office européen des brevets

(11) **EP 1 411 082 A1**

(12) **EUROPÄISCHE PATENTANMELDUNG**

(43) Veröffentlichungstag:
**21.04.2004 Patentblatt 2004/17**

(21) Anmeldenummer: **03022292.1**

(22) Anmeldetag: **02.10.2003**

(51) Int Cl.$^7$: **C08K 5/51**, C07F 9/40, C07F 9/09, C08K 5/521, C08K 5/523, C08K 5/00, C08K 3/32

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **15.10.2002 DE 10247973**

(71) Anmelder: **Clariant GmbH**
**65929 Frankfurt am Main (DE)**

(72) Erfinder:
- **Knop, Susanne, Dr.**
  **50354 Hürth (DE)**
- **Huthmacher, Elke**
  **50374 Erftstadt (DE)**
- **Nettersheim, Toni**
  **53879 Euskirchen (DE)**

(74) Vertreter: **Paczkowski, Marcus, Dr.**
**Clariant Service GmbH**
**Patente, Marken, Lizenzen**
**Am Unisys-Park 1**
**65843 Sulzbach (DE)**

(54) **Halogenreduzierte Flammschutzmittelmischungen zur Herstellung von emissionsstabilen Polyurethanweichschäumen**

(57) Die Erfindung betrifft Mischungen aus Hydroxyalkylphosphonaten und chlorierten Phosphorsäureestern, ein Verfahren zu ihrer Herstellung und ihre Verwendung.

EP 1 411 082 A1

## Beschreibung

Die Erfindung betrifft halogenreduzierte Flammschutzmittelmischungen, ein Verfahren zur Herstellung solcher Mischungen sowie die Verwendung dieser Mischung als Flammschutzmittel, insbesondere zur Herstellung von emissionsstabilen Polyurethanweichschäumen

Polyurethanschaumstoffe werden in vielen Bereichen, wie Möbel, Matratzen, Transport, Bau und technische Dämmung als Kunststoffe eingesetzt. Zum Erreichen hoher Flammschutzanforderungen, wie sie für Materialien u. a. für den Automobil-, Bahn- und Flugzeuginnenausstattungsbereich sowie die Bauisolierung gefordert sind, müssen Polyurethanschaumstoffe in der Regel mit Flammschutzmitteln ausgerüstet werden. Hierzu sind eine Vielzahl unterschiedlicher Flammschutzmittel bekannt und kommerziell erhältlich. Deren Verwendung stehen allerdings vielfach erhebliche anwendungstechnische Probleme bzw. toxikologische Bedenken entgegen.

So treten bei Verwendung fester Flammschutzmittel wie z.B. Melamin, Ammoniumpolyphosphat und Ammoniumsulfat dosiertechnische Probleme auf, die vielfach Modifikationen der Verschäumanlagen, d.h. aufwendige Umbauten und Anpassungen notwendig machen. Ein Großteil der eingesetzten flüssigen Flammschutzmittel, wie beispielsweise Tris(2-chlorethyl)-phosphat, Tris(2-chlorisopropyl)phosphat und Tetrakis(2-chlorethyl)ethylendiphosphat sind durch eine deutliche Migrationsneigung gekennzeichnet, die die Verwendbarkeit in offenzelligen Polyurethanweichschaumsystemen für die Automobil-Innenausstattung aufgrund der Anforderungen an die kondensierbaren Emissionen (Fogging) weitgehend einschränken.

Unter Fogging versteht man die Kondensation von verdampften flüchtigen Bestandteilen aus der Kraftfahrzeug-Innenausstattung an Glasscheiben, insbesondere an der Windschutzscheibe. Diese Erscheinung kann nach DIN 75201 quantitativ beurteilt werden.

Weiterhin werden aus ökotoxikologischen Gesichtspunkten sowie aufgrund verbesserter Brandnebenerscheinungen bezüglich Rauchgasdichte und Rauchgastoxizität halogenfreie Flammschutzmittelsysteme bevorzugt. Auch aus anwendungstechnischen Gründen können halogenfreie Flammschutzmittel von besonderem Interesse sein. So beobachtet man z.B. bei der Verwendung von halogenierten Flammschutzmitteln starke Korrosionserscheinungen an den zur Flammkaschierung von Polyurethanschäumen verwendeten Anlagenteilen. Dies kann auf die bei der Flammkaschierung halogenhaltiger Polyurethanschäume auftretenden Halogenwasserstoffsäure-Emissionen zurückgeführt werden.

Als Flammkaschierung bezeichnet man ein Verfahren zur Verbindung von Textilien und Schaumstoffen, bei der eine Seite einer Schaumstofffolie mit Hilfe einer Flamme angeschmolzen und in unmittelbarem Anschluss daran mit einer Textilbahn verpresst wird.

Vor dem Hintergrund des Trends zur Berücksichtigung von gasförmigen Emissionen (Volatile Organic Compounds = VOC) ergeben sich zudem wachsende Anforderungen an die Migrationsstabilität von Flammschutzmitteln.

Lösungen im Sinne hoher Migrationsstabilität bieten beispielsweise hydroxylgruppentragende oligomere Phosphorsäureester (DE-OS 43 42 972) und Hydroxyalkylphosphonate (DE-OS 199 27 548). Diese zeigen nur geringe Fogging-Beiträge, allerdings zeigen die Produkte gemäss der letztgenannten Schrift einen stark weichmachenden Effekt.

Werden nach dem bisherigen Stand der Technik halogenhaltige Flammschutzmittel eingesetzt, so können zwar flammgeschützte Polyurethane mit gutem mechanischen Eigenschaftsprofil der Schaumstoffe hergestellt werden, jedoch ist durch die verarbeitungstechnischen Probleme der HCl-Freisetzung bei der Flammkaschierung und die ungünstigen Brandnebenerscheinungen die Verwendung dieser Schaumstoffe eingeschränkt. Es wird daher ständig nach Systemen gesucht, die einen hohen Flammschutz, vereinigt mit einem reduzierten Halogengehalt, erbringen und in den wichtigsten Eigenschaften keine Verschlechterung erfahren.

Es ist Aufgabe der vorliegenden Erfindung, Flammschutzmittel-Mischungen zur Verfügung zu stellen, die die vorgenannten Nachteile nicht aufweisen und bei einem reduzierten Halogengehalt zumindestens gleiche Flammschutzwirkung zeigen.

Die vorliegende Aufgabe wird gelöst durch Mischungen aus Hydroxyalkylphosphonaten und chlorierten Phosphorsäureestern.

Überraschenderweise wurde gefunden, dass die erfindungsgemäßen Mischungen eine synergistische Wirkung zeigen und weniger an Gesamtmischung zur Erreichung einer vergleichbaren Brandklasse bei reduziertem Halogengehalt sowie verbessertem Foggingverhalten benötigt wird als der Fachmann erwarten würde.

Bevorzugt enthalten diese Mischungen 30 bis 70 Gew.-% Hydroxyalkylphosphonate und 70 bis 30 Gew.-% chlorierte Phosphorsäureester.

Besonders bevorzugt enthalten diese Mischungen 40 bis 60 Gew.-% Hydroxyalkylphosphonate und 60 bis 40 Gew.-% chlorierte Phosphorsäureester.

Bevorzugt enthalten diese Mischungen 45 bis 55 Gew.-% Hydroxyalkylphosphonate und 55 bis 45 Gew.-% chlorierte Phosphorsäureester.

Bevorzugt entsprechen die Hydroxyalkylphosphonate der allgemeinen Formel I,

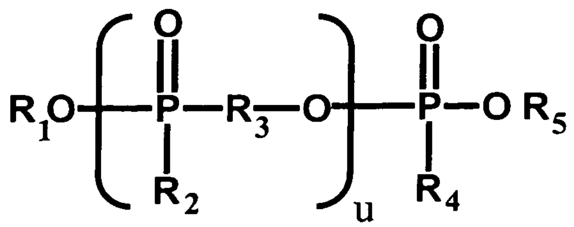

(I)

in der

u eine Kettenlänge von 0 bis 10

$R_1$, $R_5$ gleich oder verschieden sind und einen hydroxylgruppenhaltigen Rest der allgemeinen Formel II

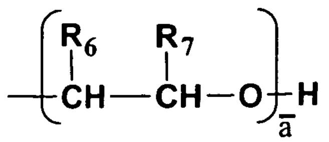

(II)

$R_2$, $R_4$ gleich oder verschieden sind und eine Alkyl-, Aryl- oder Alkylarylgruppe mit 1 bis 12 C-Atomen

$R_3$ einen Rest der allgemeinen Formel III

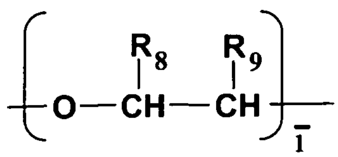

(III)

$\bar{a}$ eine durchschnittliche Kettenlänge von 0 bis 4

$\bar{i}$ eine durchschnittliche Kettenlänge von 0 bis 4

$R_6$, $R_7$, $R_8$, $R_9$ gleich oder verschieden sind und unabhängig voneinander für H oder eine Alkylgruppe mit 1 bis 6 C-Atomen stehen, bedeuten.

Besonders bevorzugt bedeuten

u eine Kettenlänge von 0 oder 1

$\bar{a}$ eine durchschnittliche Kettenlänge von 1 bis 2

$\bar{i}$ eine durchschnittliche Kettenlänge von 1 bis 2

$R_2$, $R_4$ sind gleich oder verschieden und stehen unabhängig voneinander für eine Alkylgruppe mit 1 bis 5 C-Atomen

$R_6$, $R_7$, $R_8$, $R_9$ sind gleich oder verschieden und stehen unabhängig voneinander für H oder eine Alkylgruppe mit 1 oder 2 C-Atomen.

In den Formeln der vorgenannten, erfindungsgemäß eingesetzten Hydroxyalkylphosphonate geben Zahlen wie u (für Formel I) an, wie oft eine bestimmte Gruppe im Molekül enthalten ist. Dabei sind auch Mischungen verschiedener Hydroxyalkylphosphonate möglich, d.h. dass die Werte für u verschieden groß sein können und man schließlich einen Mittelwert ü erhält.

Bevorzugt handelt es sich bei den Hydroxyalkylphosphonaten um Methanphosphonsäureoxethylat, Ethanphosphonsäureoxethylat, Methanphosphonsäurepropoxylat, Ethanphosphonsäurepropoxylat, Propanphosphonsäureoxethylat, Propanphosphonsäurepropoxylat, Diethylen-glykol-bis-(hydroxyalkoxy)methanphosphonat, und/oder Ethylenglykol-bis-(hydroxyalkoxy)-ethanphosphonat.

Bevorzugt handelt es sich bei den halogenierten Phosphorsäureestern um Tris(2-chlorethyl)phosphat, Tris (2-chlorisopropyl)phosphat, Dichlorisopropylphosphat, Trisdichlorisopropylphosphat und/oder Tetrakis(2-chlorethyl) ethylendiphosphat.

Die Erfindung betrifft auch ein Verfahren zur Herstellung von flammwidrigen Polyurethanweichschäumen mit Mischungen aus Hydroxyalkylphosphonaten und chlorierten Phosphorsäureestern, bei dem man organische Polyisocyanate mit Verbindungen mit mindestens 2 gegenüber Isocyanaten reaktionsfähigen Wasserstoffatomen mit üblichen

Treibmitteln, Stabilisatoren, Aktivatoren und/oder weiteren üblichen Hilfs- und Zusatzstoffen in Gegenwart von halogenfreien Hydroxyalkylphosphonaten der allgemeinen Formel I und chlorierten Phosphorsäureestern umsetzt.

Bevorzugt werden die Mischungen aus Hydroxyalkylphosphonaten der allgemeinen Formel I und chlorierten Phosphorsäureestern in einer Menge von 0,01 bis 50 Gewichtsteilen, bezogen auf den resultierenden Polyurethanweichschaum, eingesetzt.

Bevorzugt werden die Mischungen aus Hydroxyalkylphosphonaten der allgemeinen Formel I und chlorierten Phosphorsäureestern in einer Menge von 0,5 bis 20 Gewichtsteilen, bezogen auf den resultierenden Polyurethanweichschaum, eingesetzt.

Besonders bevorzugt werden die Mischungen aus Hydroxyalkylphosphonaten der allgemeinen Formel I und chlorierten Phosphorsäureestern in einer Menge von 0,5 bis 10 Gewichtsteilen, bezogen auf den resultierenden Polyurethanweichschaum, eingesetzt.

Bevorzugt handelt es sich bei den Hydroxyalkylphosphonaten der allgemeinen Formel I um bei Verarbeitungstemperatur flüssige Verbindungen. Unter der Verarbeitungstemperatur wird hierbei die Temperatur verstanden, bei der die Polyurethanrohstoffe den Dosier- und Mischaggregaten der Verschäumanlagen zugeführt werden. In der Regel werden hier in Abhängigkeit der Viskositäten der Komponenten und Auslegung der Dosieraggregate Temperaturen zwischen 20 und 80°C gewählt.

Bevorzugt handelt es sich bei den Hydroxyalkylphosphonaten der allgemeinen Formel I um gegenüber Isocyanaten reaktive Verbindungen.

Bei den vorgenannten Verfahren können an sich weitere übliche Hilfsstoffe eingesetzt werden.

Die vorgenannte Aufgabe wird ebenfalls gelöst durch die Verwendung von Mischungen aus Hydroxyalkylphosphonaten der allgemeinen Formel I und chlorierten Phosphorsäureestern als Flammschutzmittel.

Insbesondere betrifft die Erfindung die Verwendung von Mischungen aus Hydroxyalkylphosphonaten der allgemeinen Formel I und chlorierten Phosphorsäureestern als Flammschutzmittel zur Herstellung von emissionsstabilen flammwidrigen Polyurethanweichschäumen.

Hierfür werden bevorzugt Mischungen, die 30 bis 70 Gew.-% Hydroxyalkylphosphonate und 70 bis 30 Gew.-% chlorierte Phosphorsäureester enthalten, verwendet.

Besonders bevorzugt werden Mischungen, die 40 bis 60 Gew.-% Hydroxyalkylphosphonate und 60 bis 40 Gew.-% chlorierte Phosphorsäureester enthalten, verwendet.

Insbesondere bevorzugt werden Mischungen, die 45 bis 55 Gew.-% Hydroxyalkylphosphonate und 55 bis 45 Gew.-% chlorierte Phosphorsäureester enthalten, verwendet.

Die Herstellung von Schaumstoffen auf Isocyanatbasis ist an sich bekannt und z.B. in DE-OS 16 94 142, DE-OS 16 94 215 und DE-OS 17 20 768 beschrieben.

Es handelt sich dabei vorwiegend um Urethan- und/oder Isocyanurat- und/oder Allophanat- und/oder Uretdion- und/oder Harnstoff- und/oder Carbodiimidgruppen aufweisende Schaumstoffe. Die erfindungsgemäße Verwendung erfolgt vorzugsweise bei der Herstellung von Polyurethan- und Polyisocyanurat-Schaumstoffen.

Für die Herstellung der Schaumstoffe auf Isocyanatbasis werden eingesetzt: Als Ausgangskomponenten: Aliphatische, cycloaliphatische, araliphatische, aromatische und heterocyclische Polyisocyanate (z.B. W. Siefken in Justus Liebigs Annalen der Chemie, 562, S. 75-136), beispielsweise solche der Formel $Q(NCO)_n$ , in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten, z.B. solche Polyisocyanate, wie sie in der DE-OS 28 32 253, Seiten 10 bis 11, beschrieben werden. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

Ausgangskomponenten sind ferner Verbindungen mit mindestens zwei gegenüber Isocyanaten reaktionsfähigen Wasserstoffatomen mit einem Molekulargewicht von 400 bis 10.000 ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 200 bis 6000, in der Regel 2 bis 8, vorzugsweise aber 2 bis 6 Hydroxylgruppen aufweisende Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 beschrieben.

Wasser und/oder leicht flüchtige organische Substanzen als Treibmittel, z.B. n-Pentan, i-Pentan, Cyclopentan, halogenhaltige Alkane, wie Trichlormethan, Methylenchlorid oder Chlorfluoralkane, $CO_2$ und andere.

Gegebenenfalls werden Hilfs- und Zusatzmittel mitverwendet wie Katalysatoren der an sich bekannten Art, oberflächenaktive Zusatzstoffe, wie Emulgatoren und Schaumstabilisatoren, Reaktionsverzögerer, z.B. sauer reagierende Stoffe wie Salzsäure oder organische Säurehalogenide, ferner Zellregler der an sich bekannten Art wie Paraffine oder Fettalkohole und Dimethylpolysiloxane sowie Pigmente oder Farbstoffe und weitere Flammschutzmittel der an sich bekannten Art, ferner Stabilisatoren gegen Alterungs- und Witterungseinflüsse, Weichmacher und fungistatisch und bakteriostatisch wirkende Substanzen sowie Füllstoffe, wie Bariumsulfat, Kieselgur, Ruß- oder Schlämmkreide (DE-OS 27 32 292).

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl Hanser Verlag, München, 1993, auf den Seiten 104 bis 123 beschrieben.

Durchführung des Verfahrens zur Herstellung von Polyurethanschaumstoffen: Die Reaktionskomponenten werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß in Frage kommen, werden im Kunststoff-Handbuch, Band VI, Carl Hanser Verlag, München, 1993, auf den Seiten 139 bis 192 beschrieben.

Erfindungsgemäß lassen sich auch kalthärtende Schaumstoffe herstellen (GB-PS 11 62 517, DE-OS 21 53 086).

Selbstverständlich können aber auch Schaumstoffe durch Blockverschäumung oder nach dem an sich bekannten Doppeltransportbandverfahren hergestellt werden.

Polyisocyanuratschaumstoffe werden nach den hierfür bekannten Verfahren und Bedingungen hergestellt.

Somit können die erfindungsgemäß flammgeschützten Polyurethan-Kunststoffe als Elastomere durch Gießen, als Hart- oder Weichschäume in kontinuierlicher oder diskontinuierlicher Herstellungsweise oder als geschäumte oder massive Formartikel hergestellt werden.

Bevorzugt sind Weichschaumstoffe, die durch ein Blockverschäumungsverfahren hergestellt werden.

Die nach der Erfindung erhältlichen Produkte finden z.B. folgende Anwendung: Möbelpolsterungen, Textileinlagen, Matratzen, Automobilsitze, Armlehnen und Bauelemente sowie Sitz- und Armaturverkleidungen.

Für die Beispiele wurden eingesetzt:
Methanphosphonsäureoxethylat (OMPS) (hergestellt nach Houben-Weyl, Band XII/1, Teil 1, S. 423 - 524)

| | |
|---|---|
| Phosphorgehalt | 11,9 % (m/m) |
| Säurezahl | < 1mg KOH/g |
| Hydroxylzahl | 385 mg KOH/g |

Weiterhin wurde als chlorierter Phosphorsäureester ein kommerziell erhältliches, flüssiges Flammschutzmittel verwendet: Tetrakis(2-chlorethyl) ethylendiphosphonat (Antiblaze V 66, Rhodia Consumer Specialities Limited)

Die Erfindung wird durch die nachstehenden Beispiele erläutert:

Die oben beschriebenen Flammschutzmittel wurden in Polyurethanweichschäumen mit einem NCO-Index von 105 folgender Formulierung eingearbeitet. Der NCO-Index ist eine Kennzahl, die das prozentuale Verhältnis der eingesetzten Isocyanatmenge zur stöchiometrischen, d.h. berechneten Isocyanatmenge bei der Umsetzung je einer isocyanataktiven Gruppe mit einer Isocyanatgruppe beschreibt.

Für die Versuche wurden die folgenden Bestandteile eingesetzt:

| | |
|---|---|
| Polyetherpolyol | ®Caradol SC 46-02, Shell Chemie, trifuktionelles Polyether-Polyol mit einer Hydroxylzahl von 48 mg KOH/g |
| Katalysatoren | ®Niax A-1, OSi Specialities Inc., Mischung von 70 % Bis-(2-Dimethylaminomethyl)ether und 30 % Dipropylenglykol ®Dabco 33-LV, Air Products, eine Mischung von 67 % Dipropylenglycol und 33 % Diazabicyclo(2,2,2)octan |
| Zinn(II)ethylhexanoat | ®Desmorapid SO, Rhein Chemie Rheinau GmbH, |
| Stabilisator | ®Tegastab B3460, Th. Goldschmidt AG, polyethermodifiziertes Polysiloxan |

Toluylen-diisocyanat ®Desmodur T80/T65, Bayer AG, eine Mischung aus 2,4-Toluylen-diisocyanat und 2,6-Toluylen-diisocyanat

Tabelle 1:

| Polyurethanweichschaumformulierung | | |
|---|---|---|
| Beispiel | Raumdichte: 25 kg/$m^3$ | Raumdichte: 30 kg/$m^3$ |
| Polyetherpolyol (®Caradol SC 46-02) | 100 Teile | 100 Teile |
| Flammschutzmittelmischung gemäß den Beispielen 1-8 (Tabelle 2) | variabel | variabel |
| Wasser | 4,7 Teile | 3,5 Teile |
| Bis(2-Dimethylaminoethyl)ether/Glykol-Mischung (®Niax A1) | 0,1 Teile | 0,1 Teile |
| Diazabicyclo(2,2,2)octane/Dipropylenglycol (®Dabco 33-LV) | 0,2 Teile | 0,2 Teile |
| Siliconstabilisator (®Tegostab B 3640) | 1,3 Teile | 1,3 Teile |
| Zinn-II-ethylhexanoat (®Desmorapid SO) | 0,10 - 0,20 Teile | 0,10 - 0,20 Teile |
| Toluylen-diisocyanat (®Desmodur T80/T65) | Index 105 | Index 105 |

Zur Herstellung der Polyurethanweichschäume der Beispiele wurden alle Komponenten - mit Ausnahme des Toluydendiisocyanates - intensiv vermischt und dieses zuletzt eingearbeitet.

Ausprüfung der Polyurethan-Weichschaumstoffe:
Zur Ermittlung der Flammfestigkeit der Polyurethanweichschäume wurde der FMVSS 302-Test (Federal Motor Vehicle Safety Standard) durchgeführt. Das Emissionsverhalten wurde in Anlehnung an die DIN 75201 gravimetrisch bestimmt. Die Stauchhärte der Schaumstoffe wurde gemäß DIN 53577 bei 40 % Stauchung ermittelt. Die Ergebnisse sind in Tabelle 2 zusammengefasst.

Tabelle 2:

| Ausprüfungsergebnisse | | | | | | |
|---|---|---|---|---|---|---|
| Beispiel | Flammschutzmittelmischung | Teile auf 100 Teile Polyetherpolyol | FMVSS 302 Klassifizierung | Fogging DIN 75201 [mg] | Rohdichte kg/$m^3$ | Stauchhärte [kPa] |
| 1 | 100 Gew.-% V66 | 12 | SE | 0,6 | 25 | 5,4 |
| 2 | 100 Gew.-% V66 | 8 | SE/B | 0,5 | 25 | 5,5 |
| 3 | 100 Gew.-% OMPS | 8 | SE | 0,4 | 25 | 3,4 |
| 4 | 50 Gew.-% V66 / 50 Gew.-% OMPS | 8 | SE | 0,4 | 25 | 5,4 |
| 5 | 100 Gew.-% V66 | 8 | SE | 0,5 | 30 | 3,0 |
| 6 | 100 Gew.-% V66 | 4 | SE/B | 0,5 | 30 | 3,4 |
| 7 | 100 Gew.-% OMPS | 4 | SE | 0,4 | 30 | 3,0 |
| 8 | 50 Gew.-% V66 / 50 Gew.-% OMPS | 4 | SE | 0,4 | 30 | 3,6 |

Terminologie zur Beurteilung des Brandverhaltens:

| | |
|---|---|
| SE | Selbsterlöschend |
| SE/NBR | Selbsterlöschend/keine Brennrate |
| SE/B | Selbsterlöschend/mit Brennrate |
| B | Brennrate |

Aus der Tabelle 2 ist eindeutig zu entnehmen, dass die erfindungsgemäße Mischung überraschenderweise sowohl bei der Rohdichte 25 als auch bei der Rohdichte 30 eine Klassifizierung in der Brandklasse SE (FMVSS 302) mit Einsatzmengen von bereits 8 bzw. 4 php ermöglicht, die erwartungsgemäß nur bei alleiniger Verwendung des im Vergleich zu Antiblaze V66 effektiveren Flammschutzmittels OMPS erreichbar schienen.

Es können flammgeschützte Polyurethane mit geringeren Gehalt an OMPS hergestellt werden, ohne dass die bei Verwendung von hydroxylgruppentragenden Phosphonsäureestern erwartete geringe Stauchhärte der Schaumstoffe beobachtet wird.

In dieser Weise zeichnet sich damit der mit der erfindungsgemäßen Mischung flammgeschützte Polyurethanweichschaum des Beispiels 4 durch einen im Vergleich zum Beispiel 1 halbierten Chlorgehalt bei nahezu identischen Stauchhärten und gleichem Brandverhalten aus.

## Patentansprüche

1. Mischungen aus Hydroxyalkylphosphonaten und chlorierten Phosphorsäureestern.

2. Mischungen nach Anspruch 1, **dadurch gekennzeichnet, dass** sie
30 bis 70 Gew.-% Hydroxyalkylphosphonate und
70 bis 30 Gew.-% chlorierte Phosphorsäureester enthalten.

3. Mischungen nach Anspruch 1 oder 2, **dadurch gekennzeichnet, dass** sie
40 bis 60 Gew.-% Hydroxyalkylphosphonate und
60 bis 40 Gew.-% chlorierte Phosphorsäureester enthalten.

4. Mischungen nach einem oder mehreren der Ansprüche 1 bis 3, **dadurch gekennzeichnet, dass** sie
45 bis 55 Gew.-% Hydroxyalkylphosphonate und
55 bis 45 Gew.-% chlorierte Phosphorsäureester enthalten.

5. Mischungen nach einem oder mehreren der Ansprüche 1 bis 4, **dadurch gekennzeichnet, dass** die Hydroxyalkylphosphonate der allgemeinen Formel I entsprechen,

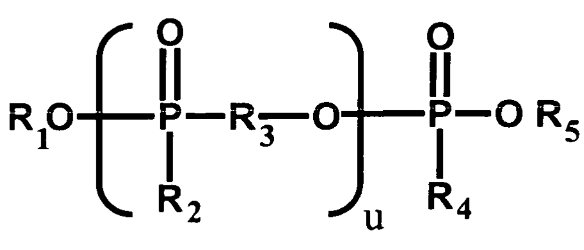

(I)

in der
u eine Kettenlänge von 0 bis 10
$R_1$, $R_5$ gleich oder verschieden sind und einen hydroxylgruppenhaltigen Rest der allgemeinen Formel II

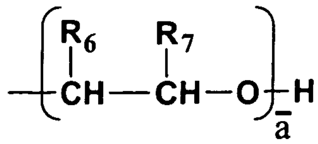

(II)

$R_2$, $R_4$ gleich oder verschieden sind und eine Alkyl-, Aryl- oder Alkylarylgruppe mit 1 bis 12 C-Atomen
$R_3$ einen Rest der allgemeinen Formel III

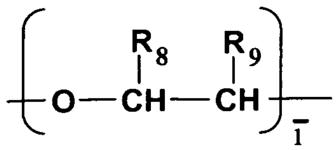

(III)

$\bar{a}$ eine durchschnittliche Kettenlänge von 0 bis 4

$\bar{i}$ eine durchschnittliche Kettenlänge von 0 bis 4 bedeuten und

$R_6$, $R_7$, $R_8$, $R_9$ gleich oder verschieden sind und unabhängig voneinander für H oder eine Alkylgruppe mit 1 bis 6 C-Atomen stehen.

**6.** Mischungen nach einem oder mehreren der Ansprüche 1 bis 5, **dadurch gekennzeichnet, dass**
u eine Kettenlänge von 0 oder 1
$\bar{a}$ eine durchschnittliche Kettenlänge von 1 bis 2
$\bar{i}$ eine durchschnittliche Kettenlänge von 1 bis 2 bedeuten und
$R_2$, $R_4$ gleich oder verschieden sind und unabhängig voneinander für eine Alkylgruppe mit 1 bis 5 C-Atomen stehen
$R_6$, $R_7$, $R_8$, $R_9$ gleich oder verschieden sind und unabhängig voneinander für H oder eine Alkylgruppe mit 1 oder 2 C-Atomen stehen.

**7.** Mischungen nach einem oder mehreren der Ansprüche 1 bis 6, **dadurch gekennzeichnet, dass** es sich bei den Hydroxyalkylphosphonaten um Methanphosphonsäureoxethylat, Ethanphosphonsäureoxethylat, Methanphosphonsäurepropoxylat, Ethanphosphonsäurepropoxylat, Propanphosphonsäureoxethylat, Propanphosphonsäurepropoxylat, Diethylenglykol-bis-(hydroxyalkoxy)methan-phosphonat und/oder Ethylenglykol-bis-(hydroxyalkoxy) ethanphosphonat handelt.

**8.** Mischungen nach einem oder mehreren der Ansprüche 1 bis 7, **dadurch gekennzeichnet, dass** es sich bei den halogenierten Phosphorsäureestern um Tris(2-chlorethyl)phosphat, Tris(2-chlorisopropyl)phosphat, Dichlorisopropylphosphat, Trisdichlorisopropylphosphat und/oder Tetrakis(2-chlorethyl)ethylendiphosphat handelt.

**9.** Verfahren zur Herstellung von flammwidrigen Polyurethanweichschäumen mit Mischungen aus Hydroxyalkylphosphonaten und chlorierten Phosphorsäureestern nach einem oder mehreren der Ansprüche 1 bis 8, **dadurch gekennzeichnet, dass** man organische Polyisocyanate mit Verbindungen mit mindestens 2 gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von halogenfreien Hydroxyalkylphosphonaten der allgemeinen Formel I und chlorierten Phosphorsäureestern umsetzt.

**10.** Verfahren zur Herstellung von flammwidrigen Polyurethanweichschäumen mit Mischungen aus Hydroxyalkylphosphonaten und chlorierten Phosphorsäureestern nach einem oder mehreren der Ansprüche 1 bis 8, **dadurch gekennzeichnet, dass** man organische Polyisocyanate mit Verbindungen mit mindestens 2 gegenüber Isocyanaten reaktionsfähigen Wasserstoffatomen mit üblichen Treibmitteln, Stabilisatoren, Aktivatoren und/oder weiteren üblichen Hilfs- und Zusatzstoffen in Gegenwart von Mischungen von halogenfreien Hydroxyalkylphosphonaten der allgemeinen Formel I und chlorierten Phosphorsäureestern umsetzt.

**11.** Verfahren nach Anspruch 9 oder 10, **dadurch gekennzeichnet, dass** Mischungen aus Hydroxyalkylphosphonaten der allgemeinen Formel I und chlorierten Phosphorsäureestern in einer Menge von 0,01 bis 50 Gewichtsteilen,

bezogen auf den resultierenden Polyurethanweichschaum, eingesetzt werden.

**12.** Verfahren nach einem oder mehreren der Ansprüche 9 bis 11, **dadurch gekennzeichnet, dass** Mischungen aus Hydroxyalkylphosphonaten der allgemeinen Formel I und chlorierten Phosphorsäureestern in einer Menge von 0,5 bis 20 Gewichtsteilen, bezogen auf den resultierenden Polyurethanweichschaum, eingesetzt werden.

**13.** Verfahren nach einem oder mehreren der Ansprüche 9 bis 12, **dadurch gekennzeichnet, dass** Mischungen aus Hydroxyalkylphosphonaten der allgemeinen Formel I und chlorierten Phosphorsäureestern in einer Menge von 0,5 bis 10 Gewichtsteilen, bezogen auf den resultierenden Polyurethanweichschaum, eingesetzt werden.

**14.** Verfahren nach einem oder mehreren der Ansprüche 9 bis 13, **dadurch gekennzeichnet, dass** es sich bei den Hydroxyalkylphosphonaten der allgemeinen Formel I um bei Verarbeitungstemperatur flüssige Verbindungen handelt.

**15.** Verfahren nach einem oder mehreren der Ansprüche 9 bis 14, **dadurch gekennzeichnet, dass** es sich bei den Hydroxyalkylphosphonaten der allgemeinen Formel I um gegenüber Isocyanaten reaktive Verbindungen handelt.

**16.** Verwendung von Mischungen aus Hydroxyalkylphosphonaten der allgemeinen Formel I und chlorierten Phosphorsäureestern als Flammschutzmittel.

**17.** Verwendung von Mischungen aus Hydroxyalkylphosphonaten der allgemeinen Formel I und chlorierten Phosphorsäureestern als Flammschutzmittel zur Herstellung von emissionsstabilen flammwidrigen Polyurethanweichschäumen.

**18.** Verwendung nach Anspruch 16 oder 17, **dadurch gekennzeichnet, dass** sie
30 bis 70 Gew.-% Hydroxyalkylphosphonate und
70 bis 30 Gew.-% chlorierte Phosphorsäureester enthalten.

**19.** Verwendung nach Anspruch 16 oder 17, **dadurch gekennzeichnet, dass** sie
40 bis 60 Gew.-% Hydroxyalkylphosphonate und
60 bis 40 Gew.-% chlorierte Phosphorsäureester enthalten.

**20.** Verwendung nach Anspruch 16 oder 17, **dadurch gekennzeichnet, dass** sie
45 bis 55 Gew.-% Hydroxyalkylphosphonate und
55 bis 45 Gew.-% chlorierte Phosphorsäureester enthalten.

Europäisches Patentamt

# EUROPÄISCHER RECHERCHENBERICHT

Nummer der Anmeldung
EP 03 02 2292

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| Y | US 5 306 312 A (RIGGINS PHILLIP H ET AL)<br>26. April 1994 (1994-04-26)<br>* Spalte 6 * | 1 | C08K5/51<br>C07F9/40<br>C07F9/09<br>C08K5/521<br>C08K5/523<br>C08K5/00<br>C08K3/32 |
| D,Y | DE 199 27 548 A (CLARIANT GMBH)<br>21. Dezember 2000 (2000-12-21)<br>* das ganze Dokument * | 1-20 | |
| Y | EP 0 398 095 A (BAYER AG)<br>22. November 1990 (1990-11-22)<br>* das ganze Dokument * | 1,9-17 | |
| Y | EP 0 324 716 A (CIBA GEIGY AG)<br>19. Juli 1989 (1989-07-19)<br>* Ansprüche 4,9 * | 1-20 | |
| Y | US 4 594 364 A (GINTER SALLY P ET AL)<br>10. Juni 1986 (1986-06-10)<br>* Anspruch 1 * | 1-20 | |
| Y | US 3 803 272 A (HAMMOND P ET AL)<br>9. April 1974 (1974-04-09)<br>* Spalte 1 * | 1-20 | RECHERCHIERTE SACHGEBIETE (Int.Cl.7)<br>C08K<br>C07F |

Der vorliegende Recherchenbericht wurde für alle Patentansprüche erstellt

| Recherchenort | Abschlußdatum der Recherche | Prüfer |
|---|---|---|
| MÜNCHEN | 17. November 2003 | Richter, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 03 02 2292

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2003

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5306312 | A | 26-04-1994 | KEINE | | | |
| DE 19927548 | A | 21-12-2000 | DE | 19927548 | A1 | 21-12-2000 |
| | | | EP | 1061095 | A1 | 20-12-2000 |
| | | | JP | 2001011302 | A | 16-01-2001 |
| | | | US | 6380273 | B1 | 30-04-2002 |
| EP 0398095 | A | 22-11-1990 | DE | 3916272 | A1 | 22-11-1990 |
| | | | DE | 59006667 | D1 | 08-09-1994 |
| | | | EP | 0398095 | A2 | 22-11-1990 |
| | | | JP | 2723656 | B2 | 09-03-1998 |
| | | | JP | 3005491 | A | 11-01-1991 |
| EP 0324716 | A | 19-07-1989 | AU | 2837889 | A | 13-07-1989 |
| | | | BR | 8900117 | A | 05-09-1989 |
| | | | EP | 0324716 | A2 | 19-07-1989 |
| | | | JP | 2000792 | A | 05-01-1990 |
| US 4594364 | A | 10-06-1986 | US | 4510101 | A | 09-04-1985 |
| US 3803272 | A | 09-04-1974 | BE | 804012 | A1 | 25-02-1974 |
| | | | CA | 989859 | A1 | 25-05-1976 |
| | | | DE | 2338007 | A1 | 07-03-1974 |
| | | | ES | 418153 | A1 | 01-06-1976 |
| | | | FR | 2197011 | A1 | 22-03-1974 |
| | | | GB | 1397854 | A | 18-06-1975 |
| | | | IT | 990462 | B | 20-06-1975 |
| | | | JP | 845611 | C | 22-02-1977 |
| | | | JP | 49062424 | A | 17-06-1974 |
| | | | JP | 51020495 | B | 25-06-1976 |
| | | | NL | 7311175 | A ,B, | 27-02-1974 |
| | | | SU | 518136 | A3 | 15-06-1976 |

EPO FORM P0461

Für nähere Einzelheiten zu diesem Anhang : siehe Amtsblatt des Europäischen Patentamts, Nr.12/82